# EUROPEAN PATENT SPECIFICATION

(11) **EP 0 602 320 B1**
(45) Date of publication and mention of the grant of the patent: **22.04.1998**
(21) Application number: 93113223.7
(22) Date of filing: 18.08.1993
(51) Int. Cl.: B60J 10/02

(54) **A windshield molding for vehicles**
Windschutzscheiben-Formleiste für Fahrzeuge
Moulure de pare-brise pour véhicules

(30) Priority: 18.08.1992 JP 63340/92
(43) Date of publication of application: 22.06.1994
(73) Proprietor: TOKAI KOGYO KABUSHIKI KAISHA, Ohbu-shi, Aichi (JP)
(72) Inventor: Yada, Yukihiko, Nagoya-shi Aichi (JP); Ito, Tosikazu, Nagoya-shi Aichi (JP)
(74) Representative: Schwabe - Sandmair - Marx

(56) References cited:
- EP-A- 0 448 296
- FR-A- 2 667 273
- FR-A- 2 668 101
- US-A- 4 757 660
- US-A- 4 865 796
- US-A- 4 968 543
- US-A- 4 984 839
- US-A- 5 039 157

## Description

This invention relates to a windshield molding for vehicles for installation to the periphery of windshield glass according to the preambles of claims 1 and 6. Such a windshield molding is disclosed e.g. in US-A-5 233 805.

Various types of windshield moldings are installed to bodies of vehicles. For example, windshield moldings provided with both sealing and decorative functions are installed to the periphery of windshield glass mounted to a window opening. Said windshield moldings are usually extrusion molded in a long belt shape using elastomers such as rubber and synthetic resins, and usually consist of a support leg which adheres and fastens to the vehicle body side and a decorative portion which is exposed toward the outside. For these molded resin moldings, it is advisable to use materials of high rigidity from the viewpoint of ease of mounting to the vehicle body panel, and for their shape retention quality.

Meanwhile, the provision of a groove to retain rainwater flowing down over the surface of said windshield glass and to drain rainwater thus retained has been proposed for some time. Such propositions are made in DE-B-20 22 684 or JP-U-42617/1980, JP-A-291721/1988 (US-A-4757660), JP-A-195032/1989 (US-A-4865796), JP-A-223018/1989, JP-U-144109/1989 (US-A-4984839) and JP-A-128721/1991. Further said windshield moldings for automobiles, articles provided with recessed grooves at the section located to the upper side of the windshield glass for the purpose of intercepting rainwater fallen on the roof panel from running down onto the surface of the windshield glass have been proposed previously, such as those described in JP-A-6756/1971, JP-U-67873/1982, JP-U-139422/1982 and JP-U-145414/1984. For such vehicle windshield moldings provided with rainwater retaining grooves, it is necessary to use materials of high rigidity for those sections which are raised from the surface of the windshield glass.

Nevertheless, when the whole body of such molding is molded by use of a single high rigidity material, a problem occurs to the effect that it becomes difficult to bend the corner section during mounting work, thus lowering productivity. Various propositions for satisfactorily bending the corner section without difficulty have been made, such as in JP-U-73014/1983, JP-A-8523/1984 and JP-A-248426/1985. Nevertheless, with these propositions, the increased numbers of processes for production of molding and for mounting to vehicle bodies are causing problems in1 productivity and, furthermore, they have the disadvantage that they must be packed and transported in bent form, thus leading to requirements for larger space for storage or transportation purposes. JP-A-145223/1989 (US-A-4968543) disclosed a proposition wherein a metal core is inserted to the molding to provide higher rigidity, but this proposition would require the use of very large mold for bending and there would also be the aforementioned problem regarding transportation.

JP-A-128721/91 or US-A-5 233 805 discloses a molding which is integrally fabricated of only one kind of material. During the course of a fabrication of this molding no change of the material which is used to fabricate the entire molding takes place. The molding structure proposed by this prior art, in particular in the corner sections, is relatively thin and of relatively rigid plastic material. This prior art document forms the preamble of claim 1.

It is the object of the present invention to provide a windshield molding which is integrally formed, however, which is not too rigid, at least in the corner sections, and can therefore be installed between the front glass or windshield of an automobile and the body frame of the automobile, and which is also rigid enough to support the front glass in a face manner.

This object is solved by the windshield molding including the features listed in claims 1 and 6. Advantages embodiments of the invention are defined by the features in the subclaims.

The advantages of the invention are based on the fact that the water-retaining groove is formed by separation of a decorative section from a glass surface of said windshield such that it faces inwards, and at least said corner section of the windshield molding is at least partially made of a more flexible material as a compared with said used for the section where the water-retaining groove is formed.

On the other hand, the above object is solved by a windshield molding including the features that at least the part corresponding to various width sections of the water-retaining groove of the windshield molding is at least partially made of a more flexible material as compared with said used for the part corresponding to the regular width section of the water-retaining groove.

By means of the aforementioned structures, the common sections and the portion where the rainwater retaining groove is formed are provided with required rigidity through molding by use of more rigid molding material thus achieving satisfactory mounting ease and original shape retention while the bending sections can be easily bent when mounting thanks to the selected use of more flexible molding material.

Furthermore, in the other invention, since at least the outside surface of the decorative portion is molded of the same material throughout the whole length, the appearance of the windshield molding can be maintained in a seamless monolithic appearance.
Fig. 1 is an explanatory perspective drawing showing the front section of an automobile featuring the moldings of this invention.
Fig. 2 is a cross-sectional view showing an installed status of a windshield molding in the first embodiment of this invention.
Fig. 3 is a cross-sectional view at section 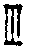 - 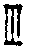 in Fig. 2.
Fig. 4 is a cross-sectional view at section 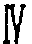 - 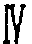 in Fig. 2.
Fig. 5 is an explanatory perspective drawing showing the windshield molding, as is shown in Figs. 2 and 4, right after extrusion and before being cut off.
Fig. 6 is an explanatory perspective drawing showing the windshield molding, as is shown in Figs. 2 and 4, bent for installation.
Fig. 7 is an explanatory side view of the overall structure of the extrusion molding facility for production of the windshield moldings as are shown in Figs. 2 and 6.
Fig. 8 is an explanatory perspective drawing showing the dies to be used for the extrusion molding facility as is shown in Fig. 7.
Fig. 9 is a horizontal sectional view at section 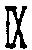 - 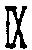 in Fig. 8.
Fig. 10 is a horizontal sectional view at section X - X in Fig. 8
Fig. 11 is a cross-sectional view at section XI - XI in Fig. 9.
Fig. 12 is a cross-sectional view at section 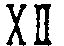 - 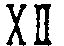 in Fig. 9.
Fig. 13 is a cross-sectional view showing the shifting status of the dies for the extrusion molding facility as is shown in Fig. 9.
Fig. 14 is a cross-sectional view showing the shifting status of the dies for the extrusion molding facility as is shown in Fig. 11.
Fig. 15 is a cross-sectional view showing the shifting status of the dies for the extrusion molding facility as is shown in Fig. 12.
Fig. 16 is an explanatory perspective drawing corresponding to Fig. 5 indicating the extruded state of a windshield molding in another embodiment of this invention.
Fig. 17 is an explanatory perspective drawing corresponding to Fig. 16 indicating a bent state of the windshield molding as is shown in Fig. 16.
Fig. 18 is a horizontal sectional view corresponding to Fig. 10 showing the extrusion molding dies for the windshield molding as isindicated in Figs. 16 and 17.

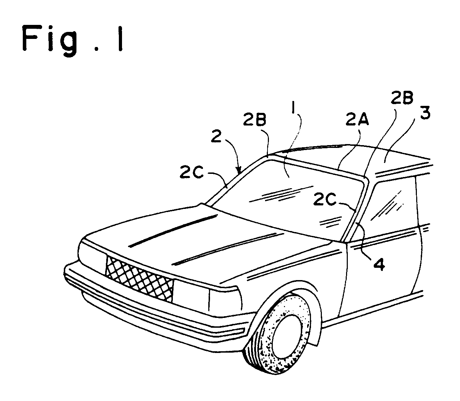

Referring more particularly to the exemplary embodiments of the present invention according to the drawings, as shown in Fig. 1, a windshield molding 2 consisting of a lengthy extrusion-molded monolithic body is installed to the periphery of the front windshield glass 1 of an automobile. Said windshield molding 2 comprises the upper molding section 2A being a common section installed to the gap between the upper edge of said windshield glass 1 and the roof panel 3, side molding sections 2C being common sections installed to the gap between the edges of both sides of windshield glass 1 and the pillar panel 4, and corner molding sections 2B being bending sections integrally connecting the upper molding section 2A and the side molding sections 2C in bent shape. These sections 2A, 2B and 2C of the molding are integrally and continuously extrusion molded as is described later herein.

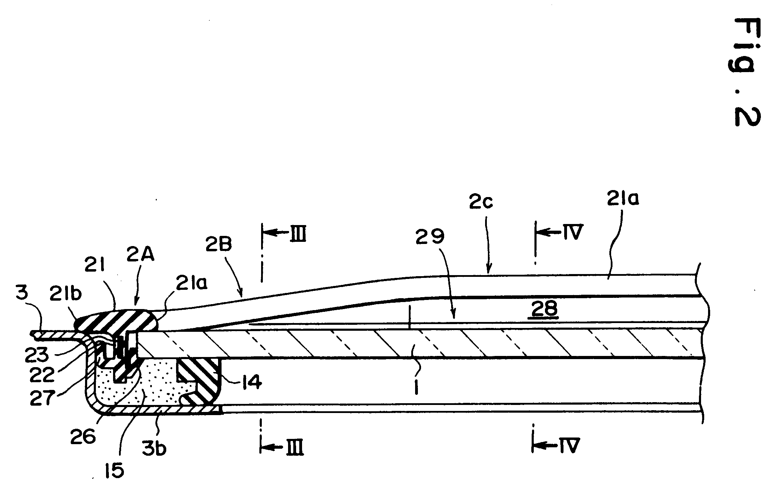

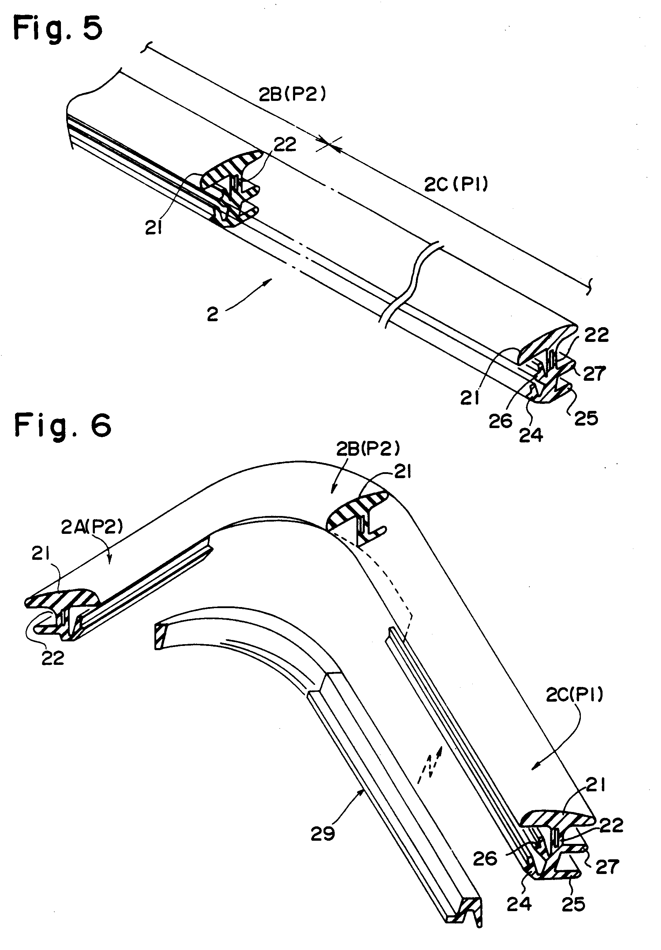

Said windshield molding 2 is usually made of elastic materials such as rubber or synthetic resin, extrusion molded integrally to a lengthy and monolithic shape using an extrusion molding facility as is described later herein and is formed to a varied cross-sectional shape throughout the length as shown in Figs. 2 and 6.

The molding 2 comprises a support leg 22 to be installed into the gap between the periphery of windshield glass 1 and the roof panel 3 and the pillar panel 4, and a decorative portion 21 which covers the space between the peripheral surfaces of the windshield glass 1 and the inner surfaces of the roof panel 3 and the pillar panel 4, fromoutside (upper side in Figs. 2, 3 and 4). Said decorative portion 21 and support leg 22 constitute a T-shaped cross-section in perpendicular to the longitudinal direction.

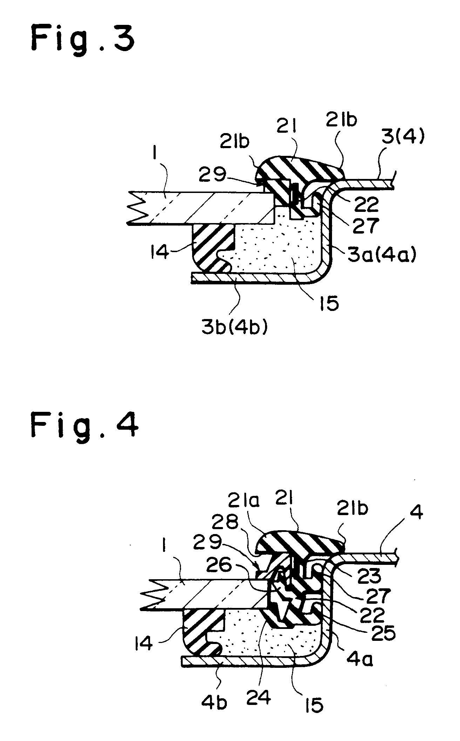

Inside the above support leg 22, at a position closer to the connecting section with the decorative part 21, a metal foil core 23 is inserted as a reinforcement core. At the deep end (the lower end in Fig. 4) of the support leg 22, the first backup flange 24 and the first elastic lip 25 project toward the inner and outer directions,respectively, of the front windshield opening and in midway of the height of the support leg, the second backup flange 26 and the second elastic lip 27 are projecting toward the inside and outside directions, respectively, of the front windshield opening. Said first backup flange 24 and said first elastic lip 25 are provided only in the side molding sections but not in the upper and corner molding sections. Said backup flange 24 and elastic lip 25 are first extruded all the way along the whole length of the molding as shown in Fig. 5 before the portions coming to the upper and corner molding sections are cut off together with a part of the support leg during the cutting process.

The second backup flange 26 is provided in the side and upper molding sections but not in the corner molding sections. Said second backup flange 26 too, is first extruded along the whole length of the molding (Fig. 5) before the portions coming to the corner sections are cut off during the cutting process (Fig. 6). Said second elastic lip 27 is not cut off however, and is provided throughout the whole length of the side molding, corner molding and upper molding sections.

The decorative portion 21 consists of a glass-side decorative section 21a which extends from the outer end (upper end in Figs. 2, 3 and 4) of the support leg 22 toward the inside of the windshield glass 1, and a panel-side decorative section 21b which extends from the outer end of the support leg 22 toward the vehicle body panel side. Said glass-side decorative section 21a corresponds to a lip structure covering the outer periphery of windshield glass 1, while said panel-side decorative section 21b corresponds to a lip structure covering the outer edge surfaces of the windshield opening in the vehicle body panel. Such glass-side decorative section 21a and panel-side decorative section 21b are formed in uniform thickness and shape throughout the whole length of the windshield molding.

Here, the side molding sections 2C are made of a more rigid material P1 such as PVC (Poly Vinyl Chloride) mixed with ABS (Acrylonitrile-Butadiene-styrene copolymer) or fiber glass. While the corner molding sections 2B and the upper molding section 2A are made of a more flexible material P2 such as PVC (Poly Vinyl Chloride) mixed with a plasticizer (DOP etc.), as compared with the material P1 of the side molding sections 2C.

Referring next to the installation of windshield glass 1 to the vehicle body using said windshield molding 2 , the inner edge section of the windshield glass opening surrounded by the roof panel 3 and the pillar panels 4 is bent inwards in a stepped shape to accept windshield glass 1 and along the other end of such steps 3a or 4a, flange 3b and 4b are provided. Although the width of the step 3a along the upper section is even, the width of the step 4a along the side sections widens gradually starting from midway along the corner sections.

First, an auxiliary molding 29 is installed along the corner section through the side section of the windshield molding 2. Such auxiliary molding 29 is installed into the interior angle between the glass-side decorative section 21a and the support leg 22 and held by joining with the second backup flange 26 of the windshield molding 2. The section of said auxiliary molding 29 corresponding to the side molding section is molded into an appropriate sectional shape matching said backup flange 26, while the sectional shape of the section corresponding to the corner section varies by continuous change in order that the gap between the windshield molding 2 and windshield glass 1 may be properly filled. Such section coming to the corner section is molded by injection molding, etc. and is made of a more flexible material P2 similar to the case of the aforementioned windshield molding 2, while the section coming to the side section is made of a more rigid material P1.

Secondly, a lengthy shape dam-rubber 14 belt is attached either to the peripheral edges of windshield glass 1 or onto the surface of the flanges 3b and 4b provided on the stepped edges of the vehicle body panels 3 and 4 and adhesive 15 is extruded over the peripheral edges outside the dam-rubber 14 before the internal peripheral edges of windshield glass 1 are applied to said dam-rubber 14. Thus, windshield glass 1 is held in place evenly around its entire edge by flanges 3b and 4b of the vehicle body panels 3 and 4 producing difference in level, corresponding to the bending depth of steps 3a and 4a, between the external peripheral surface of windshield glass 1 and the surfaces of the vehicle panels 3 and 4.

Under such condition, the windshield molding 2 is inserted into the gap between the periphery of windshield glass 1 and the vehicle body panels 3 and 4. At this time, in the upper molding section as shown in Fig. 2, the clearance between the backup flange 26 and the glass-side decorative section 21a of the upper molding section 2A holds the upper periphery of windshield glass 1, while in the side molding section as shown in Fig. 4, the clearance between the backup flange 24 and the glass-side decorative section 21a of the side molding section 2C holds the side peripheries of windshield glass 1 via the auxiliary molding 29. In the corner section as shown in Fig. 3, a portion of the auxiliary molding 29 is sandwiched between the glass-side decorative section 21a of the corner molding section 2B and windshield glass 1. While the elastic lips 25 and 27 are applied to steps 3a and 4a in bent form, such holding force by backup flanges 24 and 26 to windshield glass edge and the elastic rebounding force of the elastic lips 25 and 27 in bent form work to provide a temporary fastening force and position retaining force until adhesive 15 hardens.

When installing the windshield molding, the corner molding sections 2B need to be bent to a prescribed curvature along the edge of the windshield glass 1 and along the difference in level at the direction of inwards and outwards. But since the corner molding sections 2B are made of a more flexible material P2, they can be easily bentwhen mounting and are free from wrinkles which would otherwise occurdue to the difference in the lengths of the inner and outer bending circumferences.

When the windshield molding 2 is thus installed, in the upper molding section (refer to Fig. 2), the front surface of windshield glass 1 and that of the vehicle body panel 3 are almost level, ensuring that the glass-side decorative section 21a is stuck fast to the front peripheral surfaces of windshield glass 1. In the corner section (refer to Fig. 3, as the level difference between the aforementioned two surfaces gradually increases, the glass-side decorative section 21a starts to separate gradually from the surface of windshield glass 1 by the sandwiched thickness of said auxiliary molding 29. Such level difference increases gradually from midway along the corner molding section toward the side molding section as the sandwiched thickness of the auxiliary molding 29 gradually increases and, correspondingly, the separation from the peripheral surface of windshield glass 1 of the glass-side decorative section 21a gradually expands toward the side molding section. Further, at the center area of the side molding section (refer to Fig. 4), the largest level difference is produced and the sandwiched thickness of the auxiliary molding 29 and the separation of the glass-side decorative section 21a reach the maximum values. Such maximum separation of the glass-side decorative section 21a is maintained even toward the lower end of the side molding section. In the space produced by separation of the glass-side decorative section 21a from the windshield glass surface, a rainwater retaining groove 28 is formed facing inwards.

When the glass-side decorative section 2 1a separates from the surface of windshield glass 1, the positioning of the molding may be thought to become unstable and the molding thought to cause deformation by a trick or a collision and the other force from outside. However, since the side molding sections 2C are made of a more rigid material P1, the position and shape of the windshield molding 2 can, in fact, be maintained stably along the corner sections and all the way around.

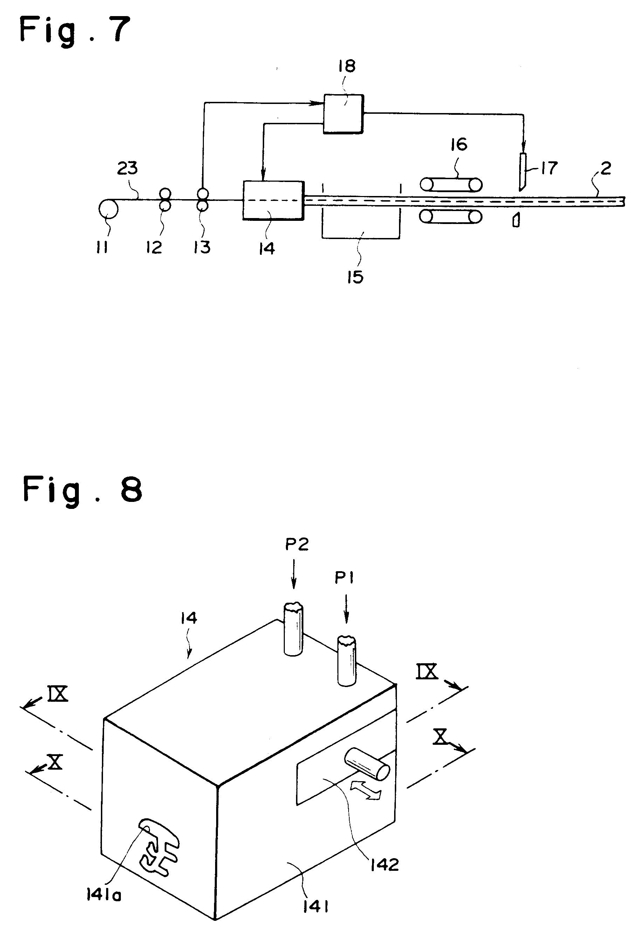

Referring next to the facility to mold said windshield molding 2, as shown in Fig. 7, the insert material 23 unrolled from coiler 11 is fed into the extruder dies 14 through forming roll 12 and sensing equipment 13, before being extruded into said cross-sectional shapes integrally with synthetic resin materials. The extruded windshield molding is fed through cooling bath 15 to cutter 17 by drawing apparatus 16 for cutting to the prescribed length.

During said processes, the information on the feeding rate of insert material 23 as detected by said sensing
equipment 13, is input to controller 18, and, based on such input signals, the timing of operations of said extruder 14 and cutter 17 are determined and controller 18 accordingly outputs actuating signals to said extruder 14 and cutter 17. The installation position of the sensing equipment can be freely selected insofar as the feeding rate or moving rate of the material may be detected at such position; for example, at a position upstream or downstream of drawing apparatus 16.

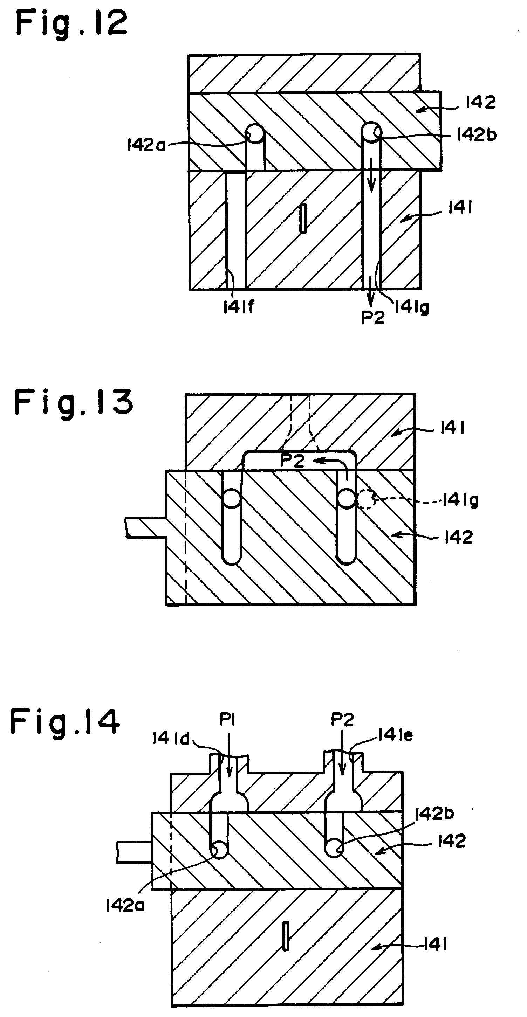

Referring now to the dies used as the extruder 14, as shown in Figs. 8 to 15, said dies are provided with a changeover mechanism for the extruding materials. Namely, the first die 141 of extruder 14 is provided with a shaped extrusion opening 141a which opens to the front end of the die, and a reservoir space 141c is provided at the bottom of extruding path 141 b. The second die 142 is mounted facing the reservoir space 141c so that it can move reciprocally in perpendicular to the extruding direction. Changeover channels 142a and 142b are provided in parallel in said die 142 and each of said pair of changeover channels is so designed to open alternately into the reservoir 141c of the first die 141 by the reciprocal movement of the second die 142 in the horizontal direction.

In said first die 141, a pair of material feed channels 141d and 141e and a pair of material discharge channels 141f and 141g are provided. Said pair of material feed channels 141d and 141e and pair of material discharge channels 141f and 141g are positioned opposite each other across the pair of changeover channels 142a and 142b ofthe second die 142. The material feed channels 141d and 141e are designed so as to be always open into the changeover channels 142a and 142b, while the material discharge channels 141f and 141g are designed so as to be only open alternately into either of the changeover channels 142a and 142b. From said material feed channel 141d, more rigid material P1 is fed for molding of the side molding sections 2C while from the material feed channel 141e, more flexible material P2 is fed to mold the corner molding sections 2B and the upper molding section 2A.

When extrusion molding the side molding sections 2C, the first die 141 and the second die 142 are set to the relative positions as shown in Figs. 6 to 9. At this time, one of changeover channels 142a of the second die 142 opens into reservoir 141c in the first die 141, while the other changeover channel 142b closes. Through the channel connections, as shown by arrows in the drawings, only the more rigid material P1, fed through the material feed channel 141d into changeover channel 142a, goes into the extrusion channel 141b of the first die 141 before being extruded out through the shaped extrusion opening 141a. At this time, with the other changeover channel 142b being connected to material discharge channel 141g, the more flexible material P2 is fed through the material feed channel 141e into the changeover channel 142b and is then discharged to the prescribed position outside the extruder through the material discharge channel 141g.

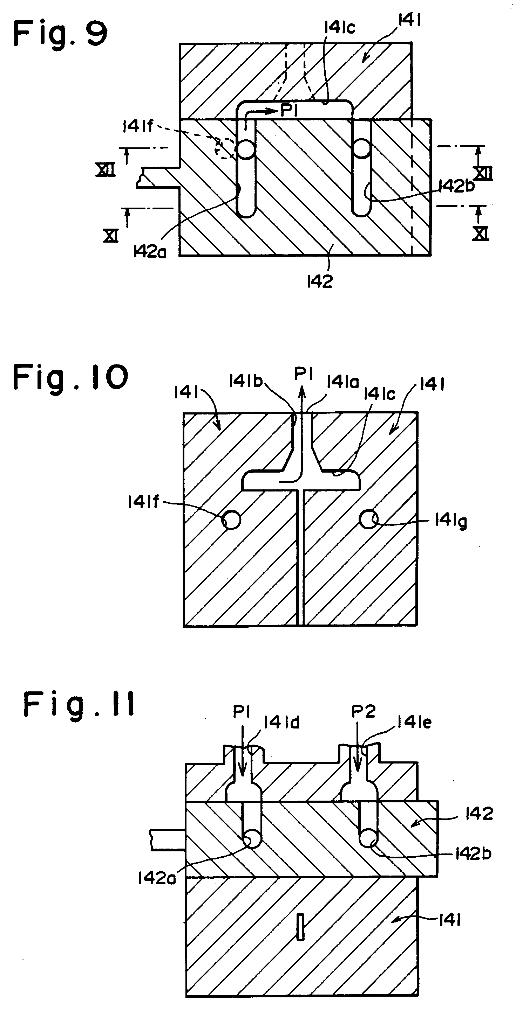

Next, when extruding the corner molding sections 2B, the first die 141 and the second die 142 are set to the relative positions as shown in Figs. 10 to 12. Then, the other changeover channel 142b of the second die 142 opens into reservoir 141c of the first die 141 while the other changeover channel 142a closes. These channel connections, as shown by arrows in the drawing, permit only the more flexible material P2 to be fed through the material feed channel 141e into the changeover channel 142b then extruded from the extrusion opening 141a after passing through the extrusion channel 141b of the first die 141. At this time, with the other changeover channel 142a being connected to the material discharge channel 141f, the more rigid material P1 is fed through the material feed channel 141d into the changeover channel 142a then discharged to the prescribed position outside the extruder through the material discharge channel 141f.

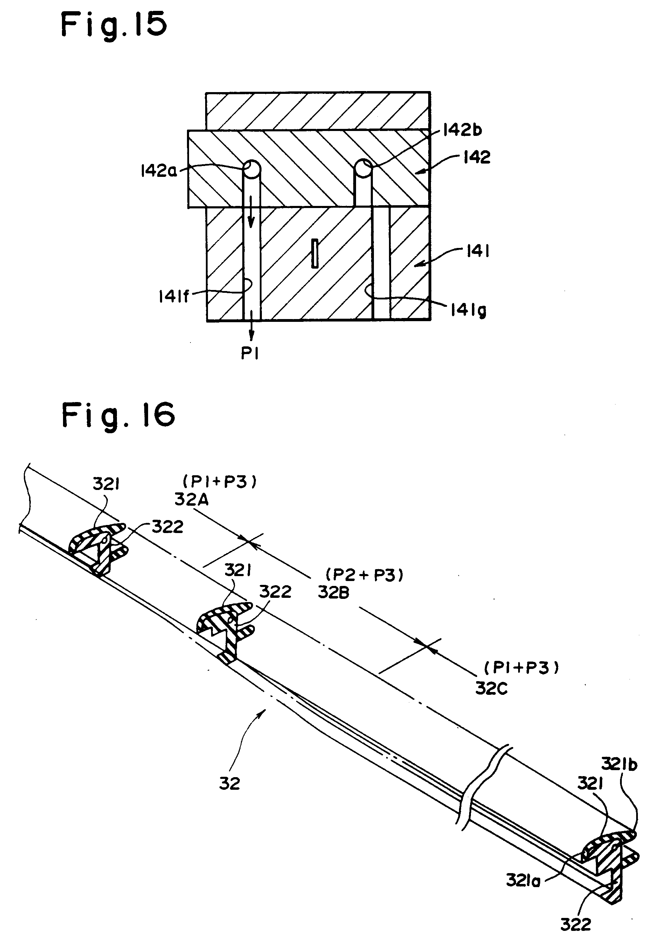

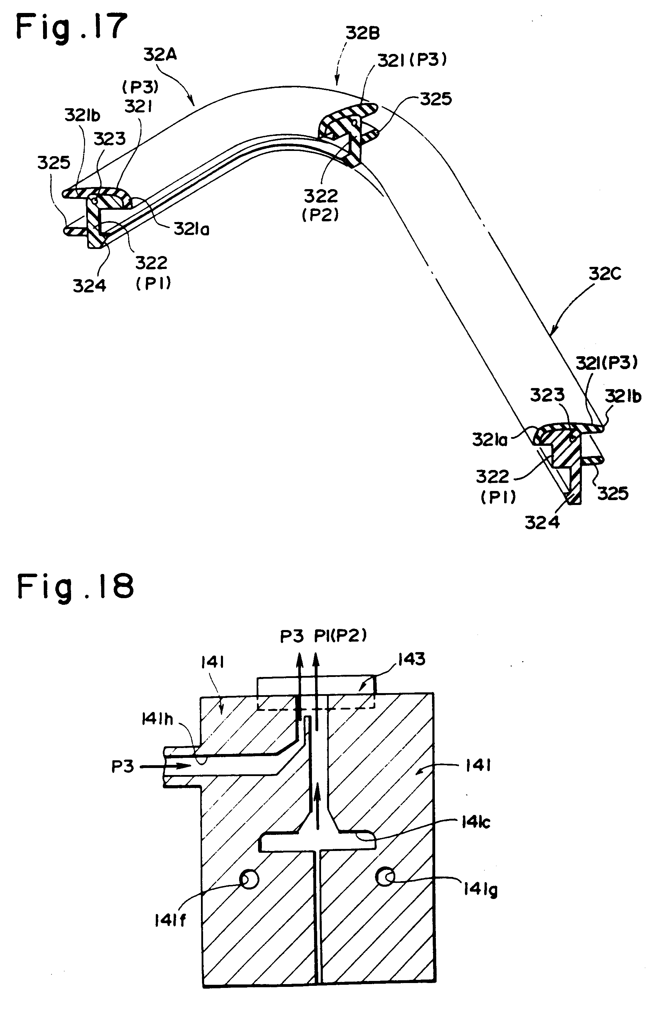

The windshield molding 32 of the second embodiment of this invention as is shown in Figs. 16 and 17 comprises, the common sections including the upper molding section 32A to be inserted into the gap between the upper periphery of the windshield glass and the roof panel, and the side molding sections 32C which are to be inserted between the side peripheries of the windshield glass and the pillar panels at both sides, and the bending sections or corner molding sections 32B connecting the upper molding section 32A and the side molding sections 32B in bent form, said moldings 32A, 32B and 32C being integrally extrusion- molded in a lengthy monolithic body.

Said windshield molding 32 is extrusion molded using elastic materials such as rubber or synthetic resins through an extruder such as that described below into a lengthy monolithic body and is provided with a support leg 322 which fills the gap between the periphery of the windshield glass and the vehicle body panel as well as with a decorative portion 321 which covers the external side of the space between the periphery of the windshield glass and the vehicle body panels. The cross-section perpendicular to the longitudinal direction formed by decorative portion 321 and support leg 322 is of a T-shape.

Said support leg 322 comprises the common sections including the side molding sections 32C and the upper molding section 32A which are made of more rigid material P1 and the bending section or corner molding sections 32B which are molded of more flexible material P2. Inside the support leg 322, at the connection section with said decorative part 321, a metal wire 323 is built-in as a reinforcing core. On the internal edge of the support leg 322, a backup flange 324 is provided throughout the whole length to support the windshield glass from the inner periphery. Surrounded by said backup flange 324 and said decorative part 321, a glass holding groove of uniform U-shape in its cross-section is formed throughout the whole length to accept the periphery of the windshield glass. Also, on the back of said support leg 322, elastic lip 325 projecting toward the inner wall surface of the vehicle body panels, is provided throughout the whole length. Said elastic lip 325 is made throughout its whole length, of more flexible material P3.

Said decorative part 321 consists of a glass-side decorative portion 321a and a panel-side decorative portion 321b which are to extend toward the windshield glass side and the vehicle body panel side, respectively, being molded in uniform thickness and shape throughout the whole length of the windshield molding. The external surface area of said decorative portion 321 is made of an elastic material P3, the same as used for said elastic lip 325, while the inner core area of the decorative portion 321 is made of the more rigid material P1, the same as used for said support leg 322 (at the side and upper molding sections), or of the more flexible material P2, the same as used for said support leg 322 (at the corner molding sections).

The height, or thickness, of the support leg 322 varies corresponding to the bending depth of the vehicle body panels, and the support leg height is set comparatively shorter along the upper molding section 32A and thicker along the side molding sections 32C. In the range of the side molding sections 32C where the height of the support leg 322 increases, thickened body portions are provided by extending the support leg portion toward the inside of the window opening, and a rainwater retaining groove is formed which is surrounded by the internal surface of said thickened body portion and the glass-side surface of the decorative portion of the decorative part 321. The size of the rainwater retaining groove facing toward the inner side of the window opening varies in proportion to the extended height of the thickened body portions of the support leg 322. It is possible to provide such thickened body portions along the support leg 322 as is proposed in Japanese Patent JP-A-128721/1991 (or US-A-5 233 805)

With such windshield molding 32 of the second embodiment of this Invention, the rigidity of the common sections, especially of the sections forming the rainwater retaining groove, is increased by the use of a more rigid material P1, and the original position and shapes of the windshield molding are steadily maintained both during and after installation. Also, bending ease of the bending sections, or the corner molding sections 32, is maintained at a satisfactory level for easier installation of the windshield molding in a bent state, said sections being free from wrinkles which would otherwise occur due to the difference in the lengths of the inner and outer bending circumferences.

Since the decorative part 321 which constitutes the external appearance of the whole windshield molding is made of the same synthetic resin material P3 throughout the whole length, the external appearance of the windshield molding is maintained in a seamless and satisfactory state.

Referring again to the molding facility of said windshield molding 32, although the facility is provided with an almost identical material changeover mechanism as that of the windshield molding 2 ofthe first embodiment of this invention, an additional material feed channel for the elastic material P3 is added to the facility. As shown in Fig. 18 which depicts the same structure and symbols as in Fig. 10, the first die 141 is provided with an additional material feed channel 141h for molding said decorative section 321, being used for its external surface area, and said elastic lip 325. The external surface area of the decorative part 321 and the elastic lip 325 are molded by said elastic material P3 being constantly fed through said material feed channel 141h for the whole length of the windshield molding.

The symbol 143 in Fig. 18 represents a third die which moves reciprocally on the front end of the first die 141 and by movement of said third die 143, the resultant shape of the extrusion opening 141a varies, thus changing the cross-sectional shape of the windshield molding while being extruded.

## Claims

1. A windshield molding (2, 32) installed around the periphery of a windshield glass (1) fixed to a windshield opening in a vehicle body panel (3, 4) through an upper section (2A, 32A) via corner section (2B, 32B) down to a side section (2C, 32C), said side section including a glass decorative portion (21) forming a water-retaining groove (28), said glass decorative portion (21) being separated from the surface of the windshield glass (1) toward the outside along the length of the water-retaining groove, the whole length of said windshield molding (2, 32) being continuously and integrally extrusion-molded into a lengthy and monolithic body, **characterized** in that at least said corner section (2B, 32B) of the windshield molding (2, 32) is at least partially made of a more flexible material (P2) as compared with that used for the section (2C, 32C) where the water-retaining groove (28) is formed.

2. A windshield molding according to claim 1, **characterized** in that said corner (2B, 32B) and upper sections (2A, 32A) are made of a more flexible material (P2) as compared with that used for the side sections.

3. A windshield molding according to claim 1, **characterized** in that said windshield molding (32) includes a support leg (322) projecting from said decorative portion (321) to be inserted and fixed to the vehicle body, at least said external surface of said decorative portion (321) being made of a single type of material (P3) throughout the whole length.

4. A windshield molding according to claim 1, **characterized** in that said support leg (322) corresponding to the corner section (32B) and the internal portion of said decorative portion (321) corresponding to the corner section (32B) are made of a more flexible material (P2) as compared with that used for the upper (32A) and side (32C) sections.

5. A windshield molding according to claim 1, **characterized** in that said support leg (22) and the internal portion of said decorative portion corresponding to the corner (2B) and upper (2A) sections are made of a more flexible material (P2) as compared with that used for the side sections (2C).

6. A windshield molding (2, 32) installed around the periphery of a windshield glass (1) which is fixed to a windshield opening in a vehicle body panel (3, 4) and including a glass decorative portion (21) formed along the longitudinal direction at least in part by being separated from the surface of the windshield glass (1) toward the outside to provide a water-retaining groove (28), the whole length of said windshield molding (2, 32) being extrusion-molded continuously and integrally into a lengthy and monolithic body from a part corresponding to a regular width section of the water-retaining groove (28) through a part corresponding to various width sections of the water-retaining groove to another part corresponding to a part of a no-water-retaining-groove section, **characterized** in that at least the part corresponding to various width sections of the water-retaining groove (28) of the windshield molding (2, 32) is at least partially made of a more flexible material (P2) as compared with that used for the part corresponding to the regular width section of the water-retaining groove (28).

7. A windshield molding according to claim 6, **characterized** in that the part corresponding to the regular width section of the water-retaining groove (28) corresponds to an upper edge of said windshield glass (1) and the other part corresponding to the no-water-retaining-groove section corresponds to a side edge of a windshield glass (1).

8. A windshield molding according to claim 6, **characterized** in that the part corresponding to the regular width section of the water-retaining groove (28) corresponds to a side edge of a windshield glass (1) and the other part corresponding to the no-water-retaining-groove section corresponds to an upper edge of a windshield glass (1).

9. A windshield molding according to one of claims 6 to 8, **characterized** in that said part corresponding to various width sections of the water-retaining groove (28) and said other part corresponding to the part of the no-water-retaining-groove section are made of a more flexible material (P2) as compared with that used for said regular width section of the water-retaining groove (28).

10. A windshield molding according to claim 6, **characterized** in that said windshield molding (32) includes a decorative portion (321) exposed externally and a support leg (322) projecting from said decorative portion to be inserted and fixed to the vehicle body (3, 4), at least the external surface of said decorative portion (321) being made of a single type of material (P3) throughout the whole length.

11. A windshield molding according to claim 6, **characterized** in that said support leg (22; 322) corresponding to various width sections of the water-retaining groove (28) and the internal portion of said decorative portion (21; 321) corresponding to various width sections of the water-retaining groove (28) are made of a more flexible material (P2) as compared with that used for the regular width section of the water-retaining groove (28).

12. A windshield molding according to claim 6, **characterized** in that said support leg (22; 322) corresponding to the various width sections of the water-retaining groove (28) and the other part corresponding to a part of the no-water-retaining-groove section and the internal portion of said decorative portion (21; 321) corresponding to the various width sections of the water-retaining groove (28) and the other part corresponding to the part of the no-water-retaining-groove section are made of a more flexible material (P2) as compared with that (P1) used for the part corresponding to the regular width section of the water-retaining groove (28).

## Patentansprüche

1. Windschutzscheibenformteil (2, 32), das um die Peripherie eines Windschutzscheibenglases (1) herum an einer Windschutzscheibenöffnung in einem Fahrzeugrahmen bzw. einer Fahrzeugkarosserie (3, 4) über einen oberen Abschnitt (2A, 32A), über einen Eckabschnitt (2B, 32B) hinab zu einem Seitenabschnitt (2C, 32C) befestigt ist, wobei der Seitenabschnitt einen dekorativen Bereich (21) für das Glas enthält der einen Wasserabführgraben bzw. eine Wasserabführrille (28) ausbildet, wobei der dekorative Bereich (21) für das Glas von der Oberfläche des Windschutzscheibenglases (1) in Richtung der Außenseite entlang der Länge des Wasserabführgrabens bzw. -rille getrennt ist, wobei die gesamte Länge des Windschutzscheibenformteils (2, 32) fortgesetzt und integral durch Extrusion zu einem länglichen und einstückigen Körper geformt ist, **dadurch gekennzeichnet**, daß zumindest der Eckabschnitt (2B, 32B) des Windschutzscheibenformteils (2, 32) zumindest teilweise aus einem flexibleren Material (P2) verglichen mit dem, das für den Abschnitt (2C, 32C) verwendet worden ist, wo der Wasserabführgraben bzw. die Wasserabführrille (28) ausgebildet ist, hergestellt ist.

2. Windschutzscheibenformteil nach Anspruch 1, dadurch gekennzeichnet, daß die Eck- (2B, 32B) und oberen Abschnitte (2A, 32A) aus einem flexibleren Material (P2) verglichen mit dem, das für die Seitenabschnitte verwendet worden ist, hergestellt sind.

3. Windschutzscheibenformteil nach Anspruch 1, dadurch gekennzeichnet, daß das Windschutzscheibenformteil (32) einen Stütz- bzw. Tragschenkel (322) enthält, der sich von dem dekorativen Bereich (321) erstreckt bzw. davon absteht, um in den Fahrzeugkörper bzw. die Fahrzeugkarosserie eingesetzt und daran befestigt zu werden, wobei zumindest die äußere Oberfläche des dekorativen Bereichs (321) aus einer einzigen Art von Material (P3) über die gesamte Länge hergestellt ist.

4. Windschutzscheibenformteil nach Anspruch 1, dadurch gekennzeichnet, daß der Stützschenkel bzw. Tragschenkel (322), der dem Eckabschnitt (32B) entspricht, und der innere Abschnitt des dekorativen Bereichs (321), der dem Eckabschnitt (32B) entspricht, aus einem flexibleren Material (P2) verglichen mit dem, das für die oberen (32A) und seitlichen (32C) Abschnitte verwendet worden ist, hergestellt sind.

5. Windschutzscheibenformteil nach Anspruch 1, dadurch gekennzeichnet, daß der Stütz- bzw. Tragschenkel (22) und der innere Abschnitt des dekorativen Bereichs, die den Eck- (2B) und oberen (2A) Abschnitten entsprechen, aus einem flexibleren Material (P2) verglichen mit dem, das für die seitlichen Abschnitte (2C) verwendet worden ist, hergestellt sind.

6. Windschutzscheibenformteil (2, 32), das um die Peripherie eines Windschutzscheibenglases (1), das an einer Windschutzscheibenöffnung in einem Fahrzeugkörperrahmen bzw. einer Fahrzeugkarosserie (3, 4) befestigt ist, eingebaut ist, und das einen dekorativen Bereich (21) für das Glas enthält, der entlang der Längsrichtung zumindest teilweise ausgebildet ist, indem er von der Oberfläche des Windschutzscheibenglases (1) in Richtung der Außenseite getrennt ist, um eine Wasserabführrille bzw. einen Wasserabführgraben (28) bereitzustellen, wobei die gesamte Länge des Windschutzscheibenformteils (2, 32) fortgesetzt und integral durch Extrusion zu einem länglichen und einstückigen Körper aus einem Teil hergestellt ist, das einem Abschnitt mit regulärer Breite des Wasserabführgrabens bzw. der Wasserabführrille (28) entspricht, über ein Teil, das Abschnitten mit verschiedener Breite des Wasserabfübrgrabens bzw. der Wasserabführrille entspricht. zu einem anderen Teil, das einem Teil eines Abschnittes ohne Wasserabführgraben bzw. Wasserabführrille entspricht, dadurch gekennzeichnet, daß zumindest das Teil, das verschiedenen Breitenabschnitten des Wasserabführgrabens bzw. der Wasserabführrille (28) des Windschutzscheibenformteils (2, 32) entspricht, zumindest teilweise aus einem flexibleren Material (P2) verglichen mit dem hergestellt ist, das für das Teil verwendet worden ist, das dem breiten Abschnitt des Wasserabführgrabens bzw. der Wasserabführrille (28) entspricht.

7. Windschutzscheibenformteil gemäß Anspruch 6, dadurch gekennzeichnet, daß das Teil, das dem Abschnitt mit regulärer Breite des Wasserabführgrabens bzw. der Wasserabführrille (28) entspricht, einer oberen Kante des Windschutzscheibenglases (1) entspricht, und das andere Teil, das dem Abschnitt ohne Wasserabführgraben bzw. -rille entspricht, einer Seitenkante eines Windschutzscheibenglases (1) entspricht.

8. Windschutzscheibenformteil gemäß Anspruch 6, dadurch gekennzeichnet, daß das Teil, das dem Abschnitt des Wasserabführgrabens bzw. der Wasserabführrille (28) mit regulärer Breite entspricht, einer Seitenkante eines Windschutzscheibenglases (1) entspricht, und das andere Teil, das dem Abschnitt ohne Wasserabführgraben bzw. -rille entspricht, einer oberen Kante eines Windschutzscheibenglases (1) entspricht.

9. Windschutzscheibenformteil gemäß einem der Ansprüche 6 bis 8, dadurch gekennzeichnet, daß das Teil, das dem Abschnitt mit verschiedenen Breiten des Wasserabführgrabens bzw. -rille (28) entspricht und das andere Teil, das dem Teil des Abschnitts ohne Wasserabführgraben bzw. -rille entspricht, aus einem flexibleren Material (P2) verglichen mit dem hergestellt sind, das für den Abschnitt mit regulärer Breite des Wasserabführgrabens bzw. -rille (28) verwendet worden ist.

10. Windschutzscheibenformteil nach Anspruch 6, dadurch gekennzeichnet, daß das Windschutzscheibenformteil (32) einen dekorativen Bereich (321) enthält, der extern freiliegt, und sich ein Stützschenkel bzw. Tragschenkel (321) von dem dekorativen Bereich erstreckt bzw. davon absteht, um in den Fahrzeugkörper (3, 4) eingesetzt und daran befestigt zu werden, wobei zumindest die äußere bzw. externe Oberfläche des dekorativen Bereichs (321) aus einer einzigen Art von Material (P3) über die gesamte Länge hergestellt ist.

11. Windschutzscheibenformteil gemäß Anspruch 6, dadurch gekennzeichnet, daß der Trag- bzw. Stützschenkel (22; 322), der Abschnitten des Wasserabführgrabens bzw. der Wasserabführrille (28) mit verschiedener Breite entspricht, und der innere Abschnitt des dekorativen Bereichs (21; 321), der Abschnitten des Wasserabführgrabens bzw. der Wasserabführrille (28) mit verschiedener Breite entspricht, aus einem flexibleren Material (P2) verglichen mit dem hergestellt sind, das für den Abschnitt des Wasserabführgrabens bzw. der Wasserabführrille (28) mit regulärer Breite verwendet worden ist.

12. Windschutzscheibenformteil nach Anspruch 6, dadurch gekennzeichnet, daß der Stütz- bzw. Tragschenkel (22; 322), der den Abschnitten des Wasserabführgrabens bzw. der Wasserabführrille (28) mit unterschiedlicher bzw. verschiedener Breite entspricht, und der andere Teil, der einem Teil des Abschnitts ohne Wasserabführgraben bzw. -rille entspricht, und der innere Abschnitt des dekorativen Bereichs (21; 321), der den verschiedenen Abschnitten des Wasserabführgrabens bzw. -rille (28) mit verschiedener Breite entspricht, und das andere Teil, das dem Teil des Abschnitts ohne Wasserabführgraben bzw. -rille entspricht, aus einem flexibleren Material (P2) verglichen mit dem (P1) hergestellt sind, das für das Teil verwendet worden ist, das dem Abschnitt des Wasserabführgrabens bzw. -rille (28) mit regulärer Breite entspricht.

## Revendications

1. Joint de pare-brise (2, 32) installé autour de la périphérie d'une vitre de pare-brise (1) fixée à une ouverture de pare-brise dans un panneau de caisse de véhicule (3, 4) par l'intermédiaire d'une section supérieure (2A, 32A), et descendant par une section de coin (2B, 32B) jusqu'à une section latérale (2C, 32C), ladite section latérale comprenant une partie décorative de vitre (21) formant une rainure de rétention d'eau (28), ladite partie décorative de vitre (21) étant séparée de la surface de la vitre de pare-brise (1) vers l'extérieur le long de la longueur de la rainure de rétention d'eau, la totalité de la longueur dudit joint de pare-brise (2, 32) étant moulée par extrusion de façon continue et d'une seule pièce sous la forme d'un corps long et monolithique, caractérisé en ce qu'au moins ladite section de coin (2B, 32B) du joint de pare-brise (2, 32) est au moins partiellement réalisée en un matériau (P2) plus flexible que celui utilisé pour la section (2C, 32C) où est formée la rainure de rétention d'eau (28).

2. Joint de pare-brise selon la revendication 1, caractérisé en ce que lesdites sections de coin (2B, 32B) et supérieure (2A, 32A) sont faites en un matériau (P2) plus flexible que celui utilisé pour les sections latérales.

3. Joint de pare-brise selon la revendication 1, caractérisé en ce que ledit joint de pare-brise (32) comporte une patte de support (322) saillant depuis ladite partie décorative (321) de façon à être insérée et fixée sur la caisse de véhicule, au moins ladite surface externe de ladite partie décorative (321) étant faite en un type unique de matériau (P3) sur toute la longueur.

4. Joint de pare-brise selon la revendication 1, caractérisé en ce que ladite patte de support (322) correspondant à la section de coin (32B) et la partie intérieure de ladite partie décorative (321) correspondant à la section de coin (32B) sont faites en un matériau (P2) plus flexible que celui utilisé pour les sections supérieure (32A) et latérale (32C).

5. Joint de pare-brise selon la revendication 1, caractérisé en ce que ladite patte de support (22) et la partie intérieure de ladite partie décorative correspondant aux sections de coin (2B) et supérieure (2A) sont faites en un matériau (P2) plus flexible que celui utilisé pour les sections latérales (2C).

6. Joint de pare-brise (2, 32) installé autour de la périphérie d'une vitre de pare-brise (1) qui est fixée à une ouverture de pare-brise dans un panneau de caisse de véhicule (3, 4), et comprenant une partie décorative de vitre (21) formée dans la direction longitudinale, étant au moins en partie séparée de la surface de la vitre de pare-brise (1) vers l'extérieur de façon à constituer une rainure de rétention d'eau (28), la totalité de la longueur dudit joint de pare-brise (2, 32) étant moulée par extrusion de façon continue et d'une seule pièce sous la forme d'un corps long et monolithique, à partir d'une partie correspondant à une section de largeur régulière de la rainure de rétention d'eau (28), et, en passant par une partie correspondant à des sections de diverses largeurs de la rainure de rétention d'eau, jusqu'à une autre partie correspondant à une partie sans section de rainure de rétention d'eau, caractérisé en ce qu'au moins la partie correspondant à des sections de diverses largeurs de la rainure de rétention d'eau (28) du joint de pare-brise (2, 32) est au moins partiellement faite en un matériau (P2) plus flexible que celui utilisé pour la partie correspondant à la section de largeur régulière de la rainure de rétention d'eau (28).

7. Joint de pare-brise selon la revendication 6, caractérisé en ce que la partie correspondant à la section de largeur régulière de la rainure de rétention d'eau (28) correspond à un bord supérieur de ladite vitre de pare-brise (1) et en ce que l'autre partie correspondant à la section sans rainure de rétention d'eau correspond à un bord latéral d'une vitre de pare-brise (1).

8. Joint de pare-brise selon la revendication 6, caractérisé en ce que la partie correspondant à la section de largeur régulière de la rainure de rétention d'eau (28) correspond à un bord latéral d'une vitre de pare-brise (1) et en ce que l'autre partie correspondant à la section sans rainure de rétention d'eau correspond à un bord supérieur d'une vitre de pare-brise (1).

9. Joint de pare-brise selon l'une des revendications 6 à 8, caractérisé en ce que ladite partie correspondant à des sections de diverses largeurs de la rainure de rétention d'eau (28) et ladite autre partie correspondant à la partie de la section sans rainure de rétention d'eau sont faites en un matériau (P2) plus flexible que celui utilisé pour ladite section de largeur régulière de la rainure de rétention d'eau (28).

10. Joint de pare-brise selon la revendication 6, caractérisé en ce que ledit joint de pare-brise (32) comprend une partie décorative (321) exposée à l'extérieur et une patte de support (322) faisant saillie depuis ladite partie décorative de façon à être insérée et fixée au corps de véhicule (3, 4), au moins la surface externe de ladite partie décorative (321) étant faite en un type unique de matériau (P3) sur la totalité de la longueur.

11. Joint de pare-brise selon la revendication 6, caractérisé en ce que ladite patte de support (22 ; 322) correspondant à des sections de diverses largeurs de la rainure de rétention d'eau (28) et la partie intérieure de ladite partie décorative (21 ; 321) correspondant aux sections de diverses largeurs de la rainure de rétention d'eau (28) sont faites en un matériau (P2) plus flexible que celui utilisé pour la section de largeur régulière de la rainure de rétention d'eau (28).

12. Joint de pare-brise selon la revendication 6, caractérisé en ce que ladite patte de support (22 ; 322) correspondant aux sections de diverses largeurs de la rainure de rétention d'eau (28) et l'autre partie correspondant à une partie de la section sans rainure de rétention d'eau et la partie intérieure de ladite partie décorative (21 ; 321) correspondant aux sections de diverses largeurs de la rainure de rétention d'eau (28) et l'autre partie correspondant à la partie de la section sans rainure de rétention d'eau sont faites en un matériau (P2) plus flexible que le matériau (P1) utilisé pour la partie correspondant à la section de largeur régulière de la rainure de rétention d'eau (28).
